# FASCICULE DE BREVET EUROPEEN

(11) **EP 4 136 500 B1**
(45) Date de publication et mention de la délivrance du brevet: **05.08.2026**
(21) Numéro de dépôt: 21717924.1
(22) Date de dépôt: 16.04.2021
(51) Int. Cl.: G02F 1/1335, G02F 1/13357

(54) **DISPOSITIF OPTOÉLECTRONIQUE COMPORTANT UN POLARISEUR ET AU MOINS UN ÉMETTEUR DE RAYONNEMENT**
OPTOELEKTRONISCHE VORRICHTUNG MIT EINEM POLARISATOR UND MINDESTENS EINEM STRAHLUNGSEMITTER
OPTOELECTRONIC DEVICE COMPRISING A POLARISER AND AT LEAST ONE RADIATION EMITTER

(30) Priorité: 17.04.2020 FR 2003885
(43) Date de publication de la demande: 22.02.2023
(73) Titulaire: Aledia, 38130 Echirolles (FR)
(72) Inventeur: LINCHENEAU, Christophe, 38430 MOIRANS (FR); ROBIN, Ivan-Christophe, 38000 GRENOBLE (FR)
(74) Mandataire: Lavoix
(86) Numéro de dépôt international: PCT/EP2021/059851
(87) Numéro de publication internationale: WO 2021/209580

(56) Documents cités:
- US-A1- 2008 116 468
- US-A1- 2017 123 267
- US-A1- 2017 365 749
- US-A1- 2019 018 287

## Description

### DOMAINE DE L'INVENTION

La présente invention concerne un dispositif optoélectronique comportant un polariseur et au moins un premier élément émetteur configuré pour émettre un premier rayonnement.

### CONTEXTE DE L'INVENTION

De nombreux types de dispositifs optoélectroniques comportent des éléments émetteurs de rayonnement et des polariseurs. Les éléments émetteurs sont prévus pour émettre un rayonnement qui sera utilisé par exemple pour former une partie d'une image. Ce dispositif électronique est, par exemple, un écran d'affichage, un projecteur lumineux ou encore une paire de lunettes utilisées pour l'immersion en réalité virtuelle.

Les éléments émetteurs sont, notamment, des ensembles de diodes électroluminescentes, ou encore des ensembles de cristaux liquides permettant de bloquer ou d'autoriser localement le passage d'une lumière émise par une source lumineuse.

Le polariseur est susceptible de remplir un grand nombre de rôles, notamment en conjonction avec une lame quart d'onde pour limiter la réflexion sur le dispositif optoélectronique d'un rayonnement extérieur, ou encore pour contrôler l'émission de lumière en fonction de l'orientation d'un cristal liquide que la lumière émise traverse.

Toutefois, le passage des rayonnements émis par les différents éléments émetteurs à travers le polariseur entraîne une perte d'intensité de ce rayonnement, qui dépend de la polarisation du rayonnement émis et de l'orientation spatiale du polariseur. En particulier, si les éléments émetteurs émettent une lumière présentant une polarisation elliptique, 50 pourcents (%) du rayonnement émis est bloqué par le polariseur. Or, les sources de lumière, telles que les diodes électroluminescentes, utilisées dans l'état de la technique, émettent naturellement des rayonnements présentant une telle polarisation. Il en résulte une perte importante du rendement du dispositif optoélectronique.

L'état de la technique pertinent est décrit, par exemple, dans les documents de brevet US 2017/123267 A1, US 2019/018287 A1, US 2008/116468 A1 et US 2017/365749 A1.

### RÉSUMÉ DE L'INVENTION

Il existe donc un besoin pour un dispositif optoélectronique comportant un polariseur et un émetteur qui présente un meilleur rendement que les dispositifs optoélectroniques de l'état de la technique.

A cet effet, il est proposé un dispositif optoélectronique selon la revendication 1

Selon des modes de réalisation particuliers, le dispositif optoélectronique comporte des caractéristiques selon les revendications dépendantes 2-13.

### BRÈVE DESCRIPTION DES DESSINS

Des caractéristiques et avantages de l'invention apparaîtront à la lecture de la description qui va suivre, donnée uniquement à titre d'exemple non limitatif, et faite en référence aux dessins annexés, sur lesquels :
- La figure 1 est une représentation schématique partielle en coupe d'un exemple de dispositif optoélectronique selon l'invention, comportant un ensemble d'éléments émetteurs,
- La figure 2 est une représentation schématique partielle en coupe d'un autre exemple de dispositif optoélectronique selon l'invention, comportant un ensemble d'éléments émetteurs, et
- la figure 3 est une représentation schématique partielle en coupe d'un exemple d'élément émetteur de la figure 1.

### DESCRIPTION DÉTAILLÉE DES MODES DE RÉALISATION PRÉFÉRÉS

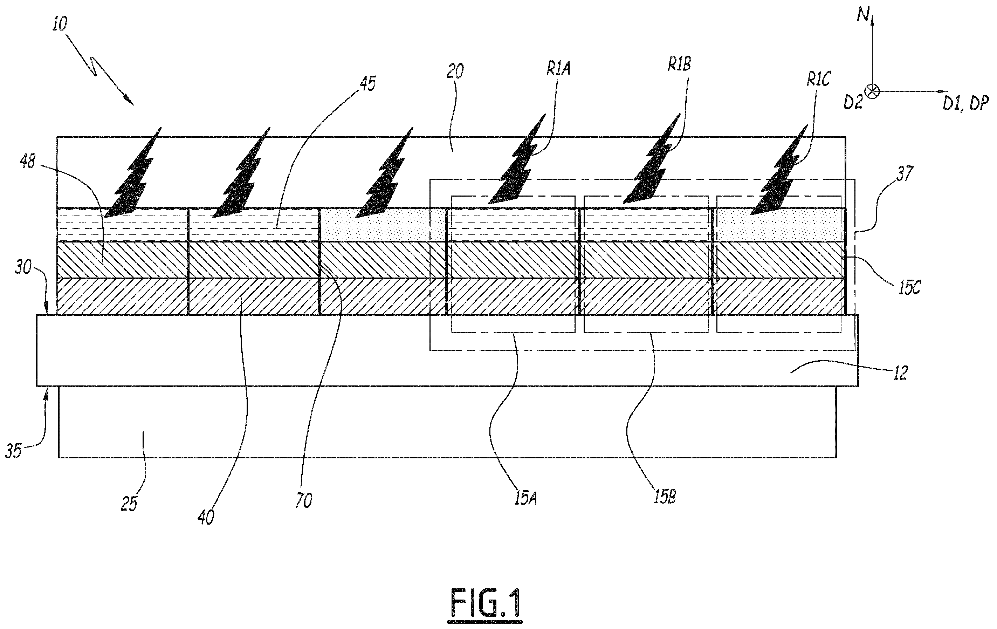

Un premier exemple de dispositif optoélectronique 10 est représenté sur la figure 1.

Le dispositif optoélectronique 10 est, par exemple, un écran d'affichage propre à afficher des images. En variante, le dispositif optoélectronique 10 est une lampe, un projecteur, ou encore une paire de lunettes de réalité virtuelle ou de réalité augmentée.

Le dispositif optoélectronique 10 comporte un substrat 12, un ensemble d'éléments émetteurs 15A, 15B, 15C, un polariseur 20 et un circuit de commande 25. Optionnellement, le dispositif optoélectronique 10 comporte, en outre, un ensemble de parois 70.

Le substrat 12 est configuré pour porter chaque élément émetteur 15A, 15B, 15C.

Le substrat 12 est, par exemple, plan. En particulier, le substrat 12 s'étend dans un plan perpendiculaire à une direction normale N.

Il est défini, en outre, deux directions D1 et D2 perpendiculaires l'une à l'autre et perpendiculaires chacune à la direction normale N.

Le substrat 12 est délimité selon la direction principale N par une première face 30 et par une deuxième face 35 du substrat 12.

Chacune de la première face 30 et de la deuxième face 35 est, par exemple, plane.

Le substrat 12 est, par exemple, réalisé au moins partiellement en un premier matériau semi-conducteur tel que le silicium, ou isolant tel que le verre ou le saphir.

L'ensemble d'éléments émetteurs 15A, 15B, 15C comporte au moins un ensemble de premiers éléments émetteurs 15A. En complément facultatif, l'ensemble d'éléments émetteurs comporte, en outre, un ensemble de deuxièmes éléments émetteurs 15B et/ou un ensemble de troisièmes éléments émetteurs 15C.

Chaque élément émetteur 15A, 15B, 15C est configuré pour émettre un premier rayonnement R1A, R1B, R1C.

Chaque premier rayonnement comprend un premier ensemble d'ondes électromagnétiques R1A, R1B, R1C.

Une longueur d'onde est définie pour chaque onde électromagnétique.

Chaque premier ensemble correspond à une première plage de longueurs d'onde. La première plage de longueurs d'onde est le groupe formé par l'ensemble des longueurs d'onde du premier ensemble d'ondes électromagnétiques.

Une première longueur d'onde moyenne est définie pour chaque première plage de longueurs d'onde.

Chaque premier rayonnement R1A, R1B, R1C est, notamment, un rayonnement visible. Un premier rayonnement R1A, R1B, R1C dont la première longueur d'onde moyenne est comprise entre 430 nanomètres (nm) et 750 nm est un exemple de lumière visible.

Chaque premier élément émetteur 15A est, par exemple, configuré pour émettre un premier rayonnement R1A rouge.

Chaque deuxième élément émetteur 15B est, par exemple, configuré pour émettre un premier rayonnement R1B vert.

Chaque troisième élément émetteur 15C est, par exemple, configuré pour émettre un premier rayonnement R1C bleu.

Un premier rayonnement R1C bleu présente, par exemple, une longueur d'onde moyenne comprise entre 430 nm et 470 nm.

Un premier rayonnement R1B vert présente, par exemple, une longueur d'onde moyenne comprise entre 520 nm et 560 nm.

Un premier rayonnement R1A rouge présente, par exemple, une longueur d'onde moyenne comprise entre 580 nm et 700 nm.

Chaque élément émetteur 15A, 15B, 15C est, par exemple, prévu pour former une partie d'un élément d'image 37, également appelé « pixel » de l'anglais « Picture Element ».

Chaque pixel 37 regroupe un ou plusieurs éléments émetteurs 15A, 15B, 15C voisins les uns des autres. Par exemple, lorsque l'écran est un écran monochrome, chaque, chaque pixel 37 comporte un unique élément émetteur 15A, 15B, 15C.

Lorsque l'écran est un écran polychrome, chaque pixel 37 comporte plusieurs éléments émetteurs 15A, 15B, 15C, au moins un des éléments émetteurs 15A, 15B, 15C étant configuré pour émettre un premier rayonnement R1A, R1B, R1C présentant une longueur d'onde moyenne différente des longueurs d'onde moyenne des autres éléments émetteurs 10 du même pixel 37.

En particulier, chaque pixel 37 comporte au moins un premier élément émetteur 15A, au moins un deuxième élément émetteur 15B et au moins un troisième élément émetteur 15C.

Dans l'exemple représenté sur la figure 1, chaque pixel 37 comporte trois éléments émetteurs 15A, 15B, 15C alignés successivement selon la direction D1, toutefois la répartition spatiale des éléments émetteurs 15A, 15B, 15C d'un même pixel 37 est susceptible de varier.

Il est à noter que le nombre d'éléments émetteurs 15A, 15B, 15C de chaque pixel 37 est susceptible de varier, ainsi que leurs couleurs.

En variante, chaque premier rayonnement R1A, R1B, R1C est identique aux autres premiers rayonnements R1A, R1B, R1C. Par exemple, chaque premier rayonnement R1A, R1B, R1C est un rayonnement bleu, ou encore un rayonnement ultraviolet.

Chaque élément émetteur 15A, 15B, 15C comporte un émetteur 40. Par ailleurs, chaque premier ou deuxième élément émetteur 15A, 15B comporte, en outre, un convertisseur 45.

Il est à noter que, dans le premier exemple de dispositif optoélectronique 10, chaque troisième élément émetteur 15C est dépourvu de convertisseur 45. Toutefois, des modes de réalisation dans lesquels au moins un troisième élément émetteur 15C comporte un convertisseur de rayonnement sont également envisageables.

En outre, chaque élément émetteur 15A, 15B, 15C comporte une lame quart d'onde 48.

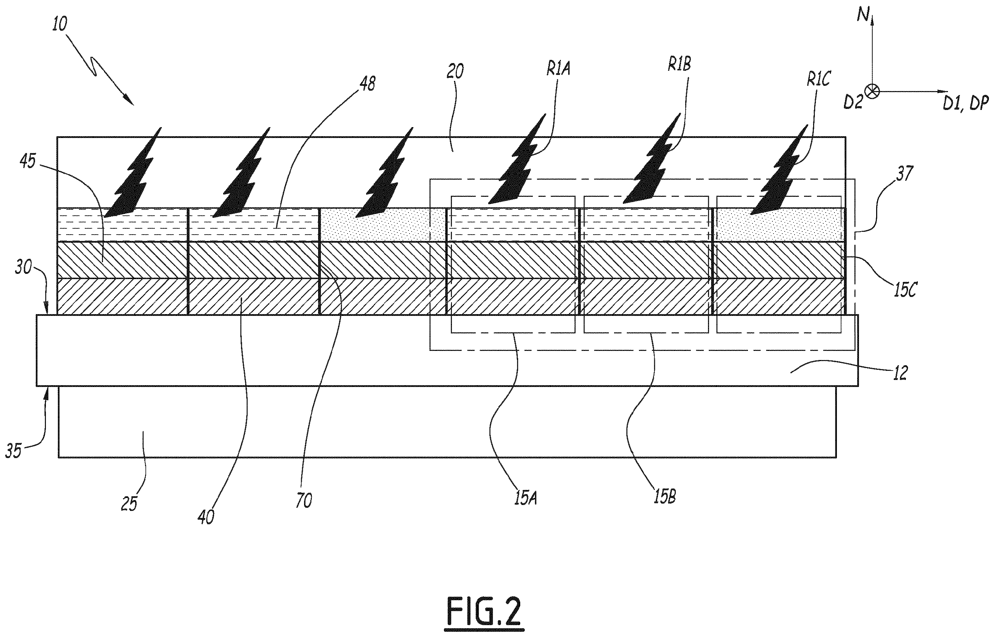

La lame quart d'onde 48 est, par exemple, interposée entre l'émetteur 40 et le convertisseur 45 correspondant comme représenté sur la figure 1. En variante, comme représenté sur la figure 2, le convertisseur 45 est interposé entre l'émetteur 40 et la lame quart d'onde 48.

Chaque émetteur 40 est porté par la première face 30. Par exemple, chaque émetteur 40 s'étend à partir de la première face 30 selon la direction normale N.

Les émetteurs 40 des différents éléments émetteurs 10 forment, par exemple, un réseau bidimensionnel dans un plan perpendiculaire à la direction normale N, par exemple un réseau à maille carrée. En variante, la maille est hexagonale, triangulaire, ou encore rectangulaire.

Chaque émetteur 40 comporte, par exemple, une structure semi-conductrice 47. Par l'expression « structure semi-conductrice », on entend toute structure constituée au moins partiellement d'un matériau semi-conducteur.

Un empilement de couches semi-conductrices empilées le long de la direction normale D est un exemple de structure semi-conductrice. Une telle structure est souvent appelée « structure bidimensionnelle ».

Une structure semi-conductrice tridimensionnelle ou un ensemble de structures semi-conductrices tridimensionnelles constituent d'autres exemples de structures semi-conductrices.

Une dimension latérale est définie pour chaque émetteur 40. La dimension latérale est la dimension maximale d'un contour entourant l'émetteur 40 dans un plan perpendiculaire à la direction normale N, tout en n'entourant aucune partie d'un autre émetteur 40.

La dimension latérale est inférieure ou égale à 1 millimètre (mm), notamment inférieure ou égale à 20 µm. Par exemple, la dimension latérale est inférieure ou égale à 10 µm. Dans un mode de réalisation, la dimension latérale est inférieure ou égale à 5 µm. Il est à noter que la dimension latérale est susceptible de varier.

Chaque émetteur 40 est configuré pour émettre un deuxième rayonnement R2. Par exemple, chaque structure émettrice est une structure LED.

En particulier, chaque émetteur 40 est configuré pour émettre le deuxième rayonnement R2 lorsque l'émetteur 40 est traversé par un courant électrique, comme cela sera expliqué plus en détails ci-après.

Le deuxième rayonnement R2 présente une deuxième plage de longueurs d'onde. La deuxième plage est distincte de la première place. En particulier, la deuxième place présente une deuxième longueur d'onde moyenne, la deuxième longueur d'onde moyenne étant différente de la première longueur d'onde moyenne. La deuxième longueur d'onde moyenne est, notamment, strictement inférieure à la première longueur d'onde moyenne.

Le deuxième rayonnement R2 est, par exemple, une lumière bleue. En particulier, le deuxième rayonnement R2 est identique au premier rayonnement R1C de chaque troisième élément émetteur 15C, lorsque ces troisièmes éléments émetteurs 15C sont dépourvus de convertisseurs 45.

En variante, le deuxième rayonnement R2 est un rayonnement ultra-violet, c'est-à-dire un rayonnement présentant une deuxième longueur d'onde moyenne comprise entre 200 nm et 405 nm.

Chaque deuxième rayonnement R2 est, par exemple, un rayonnement présentant une polarisation elliptique.

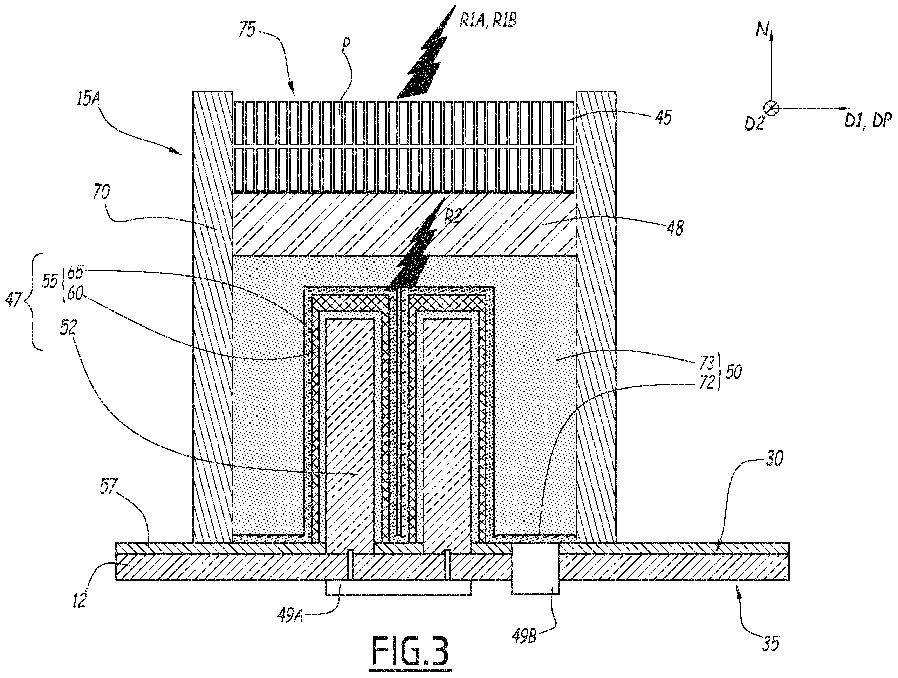

Un exemple d'élément émetteur 15A, 15B, 15C comportant un émetteur 40 est représenté sur la figure 3.

L'émetteur 40 comporte, par exemple, une ou un ensemble de structure(s) semi-conductrices 47 au moins un premier contact 49A, au moins un deuxième contact 49B et un bloc 50.

Chaque structure semi-conductrice 47 est, par exemple, une structure LED.

Chaque structure semi-conductrice 47 est, par exemple, une structure tridimensionnelle. Il est à noter que dans des variantes envisageables, la structure semi-conductrice 47 est une structure bidimensionnelle.

Selon l'exemple représenté sur la figure 3, l'élément émetteur 15A, 15B, 15C comporte une pluralité de structures semi-conductrices 47 tridimensionnelles, ces structures émettrices 47 étant notamment identiques les unes aux autres. Deux structures semi-conductrices 47 sont représentées sur la figure 3, toutefois ce nombre est susceptible de varier.

Chaque structure semi-conductrice 47 s'étend à partir de la première face 35 le long de la direction normale N.

Chaque structure semi-conductrice 47 est configurée pour émettre tout ou partie du deuxième rayonnement R2 lorsque la structure semi-conductrice 47 est traversée par un courant électrique.

La structure semi-conductrice 47 est, par exemple, un microfil.

La structure semi-conductrice 47 comprend un noyau 52 et une couche de couverture 55.

Le noyau 52 joue le rôle soit d'une couche dopée n, soit d'une couche dopée p. Le noyau 52 est constitué d'un matériau semi-conducteur appelé « matériau semi-conducteur de noyau » dans ce qui suit.

Par exemple, le matériau semi-conducteur de noyau est dopé n.

Le matériau semi-conducteur de noyau est, par exemple, GaN.

Le noyau 52 est configuré pour supporter la couche de couverture 55.

Le noyau 52 s'étend à partir de la première face 35 le long de la direction normale N. En particulier, le noyau 52 est connecté électriquement au substrat 12.

Le noyau 52 s'étend, par exemple, à travers une couche électriquement isolante 57 recouvrant une partie de la première face 35.

Le noyau 52 est, par exemple, un cylindre.

Une surface cylindrique est une surface constituée de tous les points sur toutes les lignes qui sont parallèles à une ligne et qui passent par une courbe plane fixe dans un plan qui n'est pas parallèle à la ligne. Un solide délimité par une surface cylindrique et deux plans parallèles est appelé un « cylindre ». Lorsqu'il est dit qu'un cylindre s'étend dans une direction donnée, cette direction est parallèle à la ligne.

Un cylindre présente une section transversale uniforme le long de la direction dans laquelle le cylindre s'étend.

La section transversale du noyau 52 est polygonale. Par exemple, la section transversale est hexagonale.

Cependant, d'autres formes peuvent être envisagées pour la section transversale.

Il convient de remarquer que la forme du noyau 52 peut varier, par exemple si structure semi-conductrice 47 n'est pas un microfil.

Un diamètre est défini pour le noyau 52. Le diamètre est, dans le cas d'un noyau cylindrique 52, la distance maximale entre deux points du noyau 52 qui sont diamétralement opposés dans un plan perpendiculaire à la direction normale N.

Lorsque le noyau 52 présente une section hexagonale, le diamètre du noyau est mesuré entre deux angles opposés de l'hexagone.

Le diamètre du noyau 52 est compris entre 10 nm et 5 µm.

Une longueur mesurée le long de la direction normale N est définie pour le noyau 52. La longueur est comprise entre 10 nm et 100 µm.

Le noyau 52 présente une face supérieure et une face latérale.

La face supérieure délimite le noyau 52 le long de la direction normale N. Par exemple, la face supérieure est perpendiculaire à la direction normale N.

La face latérale entoure le noyau 52 dans un plan perpendiculaire à la direction normale N.

La face latérale s'étend entre la face supérieure et le substrat 12. Lorsque le noyau 52 présente une section polygonale, la face latérale présente un ensemble de facettes planes.

La couche de couverture 55 recouvre au moins partiellement le noyau 52. Par exemple, la couche de couverture 55 recouvre au moins partiellement la face supérieure du noyau 52. En particulier, la couche de couverture 55 recouvre complètement la face supérieure.

Dans l'exemple illustré dans la figure 3, la couche de couverture 55 recouvre au moins partiellement la face supérieure et au moins partiellement la face latérale.

Comme on peut le voir dans la figure 3, la couche de couverture 55 entoure complètement le noyau 52 dans un plan perpendiculaire à la direction normale N. En d'autres termes, la couche de couverture 55 forme une coquille autour du noyau 52.

La couche de couverture 55 comprend au moins une couche émettrice 60 et une couche dopée 65.

Chaque couche émettrice 60 est configurée pour émettre le deuxième rayonnement R2 lorsque le courant électrique traverse la structure semi-conductrice 47.

Chaque couche émettrice 60 est interposée entre le noyau 52 et la couche dopée 65.

Chaque couche émettrice 60 est réalisée en un matériau semi-conducteur.

Par exemple, la couche de couverture 55 comprend un empilement de couches émettrices 60 interposées entre le noyau 52 et la couche dopée 65.

Chaque couche émettrice 60 est, par exemple, un puits quantique. En particulier, l'épaisseur de chaque couche émettrice 60 est, en tout point de la couche émettrice 60, comprise entre 1 nm et 200 nm.

Lorsque plusieurs couches émettrices 60 superposées sont présentes, ces couches émettrices sont, notamment, séparées les unes des autres par des couches barrières semi-conductrices, chaque couche barrière présentant une valeur de bande interdite strictement supérieure à la valeur de bande interdite des couches émettrices entre lesquelles la couche barrière est interposée.

L'épaisseur de chaque couche émettrice 60 est mesurée, en tout point de la couche émettrice 60, le long d'une direction perpendiculaire à la surface du noyau 52 au niveau du point de la surface du noyau 52 qui est le plus proche du point de la couche émettrice 60 considérée.

Par exemple, l'épaisseur de chaque couche émettrice 60 en un point de la couche émettrice 60 qui est aligné avec un point du noyau 52 le long de la direction normale N est mesurée le long de la direction normale N. L'épaisseur de chaque couche émettrice 60 en un point de la couche émettrice 60 qui est aligné dans un plan perpendiculaire à la direction normale avec un point du noyau 52 est mesurée le long d'une direction perpendiculaire à la facette la plus proche du noyau 52.

Chaque couche émettrice 60 est, par exemple, réalisée en InGaN.

La couche dopée 65 recouvre au moins partiellement la ou les couches émettrices 60.

La couche dopée 65 est réalisée en un matériau semi-conducteur.

La couche dopée 65 joue le rôle d'une couche dopée n ou d'une couche dopée p de la structure LED.

Le type de dopage (n ou p) de la couche dopée 65 est opposé au type de dopage (p ou n) dans le noyau 52. Par exemple, la couche dopée 65 est dopée p.

La couche dopée 65 est, par exemple, réalisée en GaN.

Les premiers et deuxième contacts 49A, 49B sont électriquement connectés au circuit de commande 25 et sont configurés pour permettre au circuit de commande 25 de générer un courant électrique traversant chaque structure semi-conductrice 47 en imposant une différence de potentiel électrique entre chaque premier contact 49A et chaque deuxième contact 49B. En particulier, les contacts 49A, 49B sont configurés pour que ce courant électrique traverse la couche de couverture 55.

Par exemple, chaque premier contact 49A est électriquement connecté, à travers le substrat 12, au noyau 52 d'une structure semi-conductrice 47 correspondante tandis que chaque deuxième contact 49B est électriquement connecté à la couche dopée 65 de la même structure semi-conductrice 47.

Selon le mode de réalisation représenté sur la figure 3, l'émetteur 40 comporte un unique premier contact 49A connecté au noyau 52 de chaque structure semi-conductrice 47 et un unique deuxième contact 49B électriquement connecté à la couche dopée 65 de chaque structure semi-conductrice 47.

En particulier, l'unique deuxième contact 49B est électriquement connecté à travers le substrat 12 au bloc 50, qui est lui-même électriquement connecté à la couche dopée 65 de chaque structure semi-conductrice 47.

En particulier, chaque structure semi-conductrice 47 est enchâssée dans le bloc 50.

Le bloc 50 est porté par le substrat 12, notamment par la première face 30. Dans le mode de réalisation représenté sur la figure 3, le bloc 50 est porté par la couche isolante 57.

Le bloc 50 contient par exemple une couche 72 d'un matériau conducteur et transparent ou semi transparent permettant de prendre le contact sur la couche 65 et relié à l'électrode 49B. Ce matériau est par exemple de l'ITO (oxyde d'indium et d'étain), du graphène, ou encore un oxyde de zinc dopé au gallium ou à l'aluminium. La couche 72 est, par exemple, une couche conforme recouvrant la ou les structure(s) semi-conductrice(s) 47 de l'émetteur 15A, 15B, 15C considéré.

Le bloc 50 contient par exemple également une masse 73 d'un matériau transparent planarisant tel que du SiO2 ou un polymère transparent.

Il est à noter que les matériaux utilisés pour le bloc 50 sont susceptibles de varier.

Le bloc 50 présente, en particulier, une hauteur supérieure ou égale à la hauteur de chaque structure semi-conductrice 47, mesurée selon la direction normale N.

Le bloc 50 est en contact avec chaque couche dopée 65. En outre, le bloc 50 n'est pas en contact avec les noyaux 52. En particulier, chaque couche de couverture 55 est interposée entre le noyau 52 de la même structure semi-conductrice 47 et le bloc 50.

Chaque convertisseur 45 est interposé selon la direction normale N entre l'émetteur 40 correspondant et le polariseur 20. Par exemple, chaque émetteur 40 d'un premier ou deuxième élément émetteur 15A, 15B est interposé entre le convertisseur 45 correspondant et le substrat 12.

Chaque convertisseur 45 est constitué d'un matériau de conversion.

Le matériau de conversion est configuré pour convertir le deuxième rayonnement R2 émis par l'émetteur 40 appartenant au même élément émetteur 15A, 15B en le premier rayonnement R1A, R1B correspondant. En d'autres termes, le matériau de conversion est configuré pour être excité par le deuxième rayonnement R2 et pour émettre en réponse le premier rayonnement R1A, R1B.

Le deuxième rayonnement R2 présente une deuxième plage de longueurs d'onde. La deuxième plage est, par exemple, distincte de la première plage. En particulier, la deuxième plage présente une deuxième longueur d'onde moyenne, la deuxième longueur d'onde moyenne étant différente de la première longueur d'onde moyenne. La deuxième longueur d'onde moyenne est, notamment, strictement supérieure à la première longueur d'onde moyenne.

Toutefois, des modes de réalisation dans lesquels la deuxième plage est identique à la première plage sont également envisageables.

Le matériau de conversion est, par exemple, un matériau semi-conducteur.

Par exemple, le matériau de conversion est choisi parmi l'ensemble constitué de : CdSe, CdTe, ZnSe, ZnTe, InP, InPZnS, Ag₂S, CulnS, CulnSe, AgInS₂, AgInSe₂, ou encore InPZnₓSe_{x-y}S_{y}. Toutefois, d'autres types de matériaux sont envisageables.

Selon d'autres modes de réalisation, le matériau de conversion est un matériau non semi-conducteur tel qu'un grenat inorganique. Par exemple, le matériau de conversion est un grenat d'yttrium-aluminium dopé. Toutefois, d'autres types de matériaux de conversion non semi-conducteurs, notamment d'autres grenats, sont envisageables.

En particulier, le matériau de conversion peut être un phosphore inorganique.

Les particules à base de grenat d'yttrium-aluminium (par exemple, YAG:Ce), les particules à base de grenat d'aluminium-terbium, TAG, (par exemple, TAG:Ce), les particules à base de silicates (par exemple, SrBaSiO4:Eu), les particules à base de sulfures (par exemple, SrGa₂S₄:Eu, SrS:Eu, CaS:Eu, etc.), les particules à base de nitrures (par exemple, Sr₂Si₅N₈:Eu, Ba₂Si₅N₈:Eu, etc.), les particules à base d'oxynitrures (par exemple, Ca-α-SiAlON:Eu, SrSi₂O₂N₂:Eu, etc.), les particules à base de fluorures (par exemple, K₂SiF₆ :Mn, Na₂SiF₆ :Mn, etc.) sont des exemples de phosphores inorganiques.

De nombreux autres matériaux de conversion peuvent être utilisés, tels que les aluminates dopés, les nitrures dopés, les fluorures dopés, les sulfures dopés, ou les silicates dopés.

Le matériau de conversion est, par exemple, dopé au moyen d'éléments de terres rares, d'éléments de métaux alcalino-terreux ou d'éléments de métaux de transition. Le cérium est, par exemple, parfois utilisé pour le dopage de grenats d'yttrium-aluminium.

Le convertisseur 45 comprend, par exemple, un ensemble de particules P réalisées en le matériau de conversion. Ces particules P sont parfois appelées « luminophores ».

En particulier, le convertisseur 45 comporte une pluralité de couches de particules P, ces couches de particules P étant superposées selon la direction normale N.

Le convertisseur 45 est, notamment, configuré pour que le premier rayonnement R1A, R1B présente une polarisation rectiligne.

En particulier, chaque premier rayonnement R1A, R1B présente une direction de polarisation DP, cette direction de polarisation étant par exemple perpendiculaire à la direction normale N. En particulier, la direction de polarisation DP est parallèle à la direction D1, toutefois l'orientation de la direction de polarisation DP est susceptible de varier dans le plan formé par les directions D1 et D2.

Il est notamment entendu par « parallèle » un parallélisme à 10 degrés (°) près, par exemple à 5 ° près, en particulier à 1 ° près ou mieux.

Chaque particule P présente une première dimension selon la première direction D1 et une deuxième dimension selon la deuxième direction D2.

Chaque première ou deuxième dimension est comprise entre 1 nm et 1000 nm.

En outre, un ratio entre, au numérateur, la première dimension et, au dénominateur, la deuxième dimension, est strictement supérieur à 1, notamment compris entre 2 et 1000. Par exemple, le ratio est supérieur ou égal à 4,5.

Chaque particule P est, par exemple, une tige, un tube ou un fil s'étendant selon la première direction D1.

En variante, chaque particule P est une plaquette s'étendant dans un plan perpendiculaire à la deuxième direction D2.

En variante ou en complément, chaque particule P est, par exemple, une boîte quantique.

Selon un mode de réalisation, chaque particule P comporte un cœur réalisé en le matériau de conversion et une coquille entourant le cœur. Le cœur présente, par exemple, un diamètre inférieur ou égal à 50 nm, notamment inférieur ou égal à 20 nm.

La coquille est, par exemple, réalisée en un matériau semi-conducteur présentant une valeur de bande interdite strictement supérieure à la valeur de bande interdite du matériau de conversion, ou en variante en un matériau électriquement isolant.

Les particules P sont, par exemple, disposées le long d'un ensemble de lignes propres. Chaque ligne propre est, par exemple, parallèle à la direction de polarisation DP.

En particulier, les lignes propres sont parallèles entre elles.

Une distance entre deux lignes propres consécutives est, par exemple, comprise entre 1 nm et 10 µm.

Une pluralité de particules P sont disposées le long de chaque ligne propre.

Selon un mode de réalisation, les particules P sont disposées sur au moins un plan perpendiculaire à la direction normale N, par exemple sur plusieurs plans parallèles, les particules de chaque plan formant un réseau bidimensionnel dans ce plan.

Le réseau bidimensionnel est, par exemple, un réseau à maille rectangulaire. En variante, le réseau est un réseau à maille hexagonale, carrée, ou encore à maille losange.

Il est à noter que des modes de réalisation dans lesquels les particules P sont disposées le long d'un ensemble de lignes propres parallèles sans former un réseau dans le plan correspondant sont également envisagés.

La lame quart d'onde 48 de chaque élément émetteur 15A, 15B, 15C est interposée entre l'émetteur 40 et le polariseur 20. Par exemple, la lame quart d'onde 48 est en contact avec le bloc 50, notamment avec une face du bloc 50 délimitant le bloc 50 selon la direction normale N.

En particulier, chaque convertisseur 45 est porté par la lame quart d'onde 48 correspondante, et est donc interposé entre la lame quart d'onde 48 et le polariseur 20 selon la direction normale N. Ainsi, la lame quart d'onde 48 est prévue pour être traversée par le deuxième rayonnement R2 lorsque le deuxième rayonnement R2 quitte l'émetteur 40 avant d'atteindre le convertisseur 45 correspondant (dans le cas d'un premier ou deuxième élément émetteur 15A, 15B) ou le polariseur 20 (dans le cas d'un troisième élément émetteur 15C).

La lame quart d'onde 48 présente un axe lent. L'axe lent est perpendiculaire à la direction normale N. En outre, l'axe lent forme un angle égal à 45 ° avec la direction de polarisation DP.

La lame quart d'onde 48 est configurée pour introduire, dans le deuxième rayonnement R2, un déphasage égal à un quart de π, ou 90°, entre la composante selon l'axe lent du deuxième rayonnement R2 et la composante selon une direction, appelée axe rapide, perpendiculaire à l'axe lent et à la direction normale N. En particulier, la lame quart d'onde 48 est configurée pour retarder la composante selon l'axe lent.

Selon une variante, représentée sur la figure 2, la lame quart d'onde 48 est interposée entre le convertisseur 45 et le polariseur 20. Dans ce cas, la lame quart d'onde 48 est configurée pour introduire, dans le premier rayonnement R1A, R1B, un déphasage égal à un quart de π, ou 90°, entre la composante selon l'axe lent du premier rayonnement R1A, R1B et la composante selon une direction, appelée axe rapide, perpendiculaire à l'axe lent et à la direction normale N. En particulier, la lame quart d'onde 48 est configurée pour retarder la composante selon l'axe lent.

La lame quart d'onde 48 est réalisée en un matériau biréfringent.

La lame quart d'onde 48 est, par exemple, réalisée en silice SiO₂, notamment en quartz ou en spath.

La lame quart d'onde 48 est, par exemple, commune à chaque élément émetteur 15A, 15B, 15C. Par exemple, la lame quart d'onde 48 est une unique plaque entre laquelle et le substrat 12 chaque émetteur 40 est interposé.

Comme représenté sur les figures 1, 2 et 3, la lame quart d'onde 48 délimite, par exemple, pour chaque paroi 70, une tranchée traversant la lame quart d'onde 48 selon la direction normale N et accueillant la paroi 70 correspondante.

Le polariseur 20 est configuré pour être traversé selon la direction normale N par chaque premier rayonnement R1A, R1B, R1C.

Par exemple, le polariseur 20, chaque convertisseur 45 et l'émetteur 40 correspondant sont disposés le long d'un même segment de droite parallèle à la direction normale N.

Le polariseur 20 est, par exemple, une plaque s'étendant dans un plan perpendiculaire à la direction normale N.

En particulier, le polariseur 20 est en regard de la première face 30 du substrat 12, chaque élément émetteur 15A, 15B, 15C étant interposé entre la première face 30 et le polariseur 20.

Le polariseur 20 présente un axe.

L'axe du polariseur 20 est parallèle à la direction de polarisation DP. L'axe du polariseur 20 est, par exemple, parallèle à la première direction D1.

Le polariseur 20 est configuré pour être traversé selon la direction normale N par la composante selon l'axe du polariseur 20 de chaque premier rayonnement R1A, R1B, R1C, et pour empêcher la propagation selon la direction normale N de la composante de chaque premier rayonnement R1A, R1B, R1C selon une direction perpendiculaire à la direction normale N et à l'axe du polariseur 20.

Le polariseur 20 est, par exemple un polariseur métallique par absorption, comportant des fils métalliques perpendiculaires à la direction de polarisation DP.

L'ensemble de parois 70 est configuré pour empêcher chaque premier rayonnement R1A, R1B, R1C émis par un élément émetteur 15A, 15B, 15C d'atteindre un autre élément émetteur 15A, 15B, 15C. En outre, l'ensemble de parois 70 est configuré pour empêcher chaque deuxième rayonnement R2 émis par un élément émetteur 15A, 15B, 15C d'atteindre un autre élément émetteur 15A, 15B, 15C, notamment d'atteindre le convertisseur 45 de cet autre élément émetteur 15A, 15B, 15C.

Par exemple, l'ensemble de parois 70 délimite un ensemble d'alvéoles 75 dans un plan perpendiculaire à la direction normale N, chaque alvéole 75 accueillant au moins la lame quart d'onde 48, par exemple le convertisseur 45 et la lame quart d'onde 48, en particulier le convertisseur 45, la lame quart d'onde 48 et l'émetteur 40 d'un unique élément émetteur 15A, 15B, 15C.

Selon un mode de réalisation, chaque paroi 70 s'étend selon la direction normale N à partir de la première face 30. En variante, chaque paroi 70 est accueillie entre deux lames quart d'onde 48 voisines, mais ne s'étend pas entre les émetteurs 40 correspondant à ces lames quart d'onde 48. Par exemple, chaque paroi 70 est ménagée dans la couche formée par les lames quart d'onde 48.

Il est à noter que des modes de réalisation dans lesquels au moins une paroi 70 s'étend à partir de la première face 30 selon une direction distincte de la direction normale N sont envisageables.

Chaque paroi 70 est configurée pour empêcher chaque rayonnement R1A, R1B, R1C, R2 de traverser la barrière, notamment selon une direction perpendiculaire à la direction normale.

Chaque paroi 70 est, par exemple, configurée pour réfléchir le ou les rayonnements R1A, R1B, R1C, R2 émis par l'élément émetteur 15A, 15B, 15C accueilli dans la ou les alvéoles 75 délimitée par la paroi 70.

Chaque paroi 70 est, par exemple, réalisée en un matériau métallique tel que l'aluminium, ou l'argent.

En variante, chaque paroi 70 est configurée pour absorber chaque rayonnement R1A, R1B, R1C, R2 atteignant la paroi 70.

Le circuit de commande 25 est électriquement connecté à chaque premier ou deuxième contact 49A, 49B et configuré pour imposer une différence de potentiel entre les contacts 49A, 49B de chaque élément émetteur 15A, 15B, 15C de manière à générer un courant électrique traversant l'émetteur 40 dudit élément émetteur 15A, 15B, 15C.

Le circuit de commande 25 comporte par exemple un ensemble de composants, notamment de transistors, CMOS (de l'Anglais « Complementary Metal-Oxide Semiconductor ») portés par le substrat 12, notamment lorsque le substrat 12 est un semi-conducteur tel que le silicium.

En variante ou en complément, notamment lorsque le substrat 12 est électriquement isolant, le circuit de commande 25 comporte un ensemble de transistors en couche mince. Le transistor en couches minces est un type de transistor à effet de champ formé par le dépôt successif de plusieurs couches minces (quelques centaines de nanomètres).

Grâce à l'utilisation d'un convertisseur 45 émettant un premier rayonnement R1A, R1B polarisé rectilignement selon une direction DP parallèle à l'axe du polariseur 20, la présence du polariseur 20 ne provoque pas de perte d'intensité de ce premier rayonnement R1A, R1B.

Le rendement du dispositif optoélectronique 10 est donc amélioré par rapport à d'autres dispositifs optoélectroniques 10 comportant un élément émetteur et un polariseur.

En outre, dans le cas où la lame quart d'onde 48 est placée entre le convertisseur 45 et le polariseur 20, la présence de la lame quart d'onde 48 permet de diminuer l'intensité d'une lumière parasite qui proviendrait de l'extérieur du dispositif optoélectronique 10 et se réfléchirait sur l'ensemble des éléments émetteurs 15A, 15B, 15C et/ou sur le substrat 12. En effet, cette lumière parasite, non polarisée, verrait son intensité diminuée grandement par son premier passage à travers le polariseur 20, puis à travers la lame quart d'onde 48, suivie d'une réflexion sur le substrat ou les éléments 15A, 15B, 15C, puis une nouvelle traversée de la lame quart d'onde 48 avant d'atteindre le polariseur 20 qui en bloquera alors la grande majorité. Le contraste du dispositif optoélectronique 10, lorsque celui-ci est notamment un écran, est alors amélioré.

Des particules P présentant un ratio strictement supérieur à 1, notamment compris entre 2 et 1000, entre les première et deuxième dimensions permettent d'obtenir un convertisseur 45 émettant un premier rayonnement R1A, R1B polarisé rectilignement de manière aisée, notamment via le dépôt de ces particules sous un champ électrique orienté selon la première direction D1.

D'autres procédés d'obtention du convertisseur 45 sont également envisageables, tels qu'une lithographie optique ou encore le greffage.

Lorsque les troisièmes éléments émetteurs 15C sont dépourvus de convertisseur 45, l'intensité du rayonnement R1C est diminué de 50% lors de son passage à travers le polariseur 20. Cela peut s'avérer utile dans le cas où le rayonnement R2, R1C émis par l'émetteur 40 correspondant est très intense par rapport à l'intensité des rayonnements R1A, R1B, notamment pour maîtriser le rendu donné par les éléments émetteurs 15A, 15B, 15C s'ils sont allumés en même temps. En particulier, cela est utile lorsque le rayonnement R2 est bleu, afin d'obtenir une bonne balance des blancs.

La présence des parois 70 permet d'éviter la diaphonie entre des éléments émetteurs 15A, 15B, 15C voisins, et donc de mieux maîtriser les couleurs émises par le dispositif optoélectronique 10.

Le greffage est un procédé permettant de fixer des particules P à une surface, dans lequel la surface est recouverte d'une couche propre à fixer les particules P à la surface. Par exemple, la surface est fonctionnalisée en utilisant des molécules fixées à la surface et propre à permettre à chaque particule P de se fixer à la surface via la molécule. En particulier, une extrémité de chaque molécule est propre à se fixer à la surface, et une autre extrémité est apte à se fixer à une particule P du matériau de conversion, de sorte que la particule P est fixée à la surface par la molécule.

Ces molécules sont parfois appelées « agents de surface », « ligands bifonctionnels », « ligands polyfonctionnels », « liants », « lieurs », « agents de recouvrement », etc.

Il convient de remarquer que toute molécule organique fonctionnelle présentant au moins deux groupes réactifs fonctionnels peut être utilisée en tant que molécule M dans la présente invention.

Des exemples de molécules M peuvent être sélectionnés, par exemple, parmi le groupe « organosilane », le groupe « thiol », le groupe « acrylate » et le groupe « amine ».

Le groupe « organosilane » comprend, par exemple, les molécules 3-aminopropyltriméthoxysilane, 3-mercaptopropyltriméthoxysilane, 3-(méthacryloyloxy)propyltriméthoxysilane et allyltriméthoxysilane.

Le groupe « thiol » comprend, par exemple, les molécules 1,6-hexanédithiol, triméthylolpropane tris(3-mercaptopropionate), pentaérythritol tétrakis(3-mercaptopropionate).

Les acrylates sont par exemple le poly(éthylèneglycol)diacrylate, le triacrylate de pentaérythritol et le tétraacrylate de pentaérythritol.

Les molécules du groupe « amine » incluent les molécules bis(hexaméthylène)triamine, bis(3-aminopropyl)amine, 3,3'-diamino-N-méthyldipropylamine, etc.

La longueur de chaque molécule est choisie de manière à imposer une distance moyenne entre les particules. La longueur de chaque molécule est notamment choisie de manière à limiter le risque d'absorption, par une particule P, d'un premier rayonnement R1A, R1B émis par une particule P voisine.

Il convient de remarquer que des modes de réalisation dans lesquels plusieurs couches de molécules et plusieurs couches de particules P sont empilées peuvent être envisagés. Par exemple, une couche de molécules est utilisée pour fixer une première couche de particules P, chaque autre couche de particules P étant fixée à une couche sous-jacente de particules P par une couche de molécules interposée entre les deux couches.

Il est à noter que, bien que le dispositif optoélectronique 10 a été décrit précédemment dans un cas où chaque émetteur 40 comporte une ou des structures semi-conductrices, notamment de type LED, d'autres modes de réalisation sont envisageables.

Par exemple, chaque émetteur 40 est susceptible de comprendre une source lumineuse émettant le deuxième rayonnement R2, par exemple, et un système à cristal liquide propre à commuter entre une configuration permettant au deuxième rayonnement R2 de traverser le système pour sortir de l'émetteur 40 et une configuration empêchant le deuxième rayonnement R2 de sortir de l'émetteur 40.

En particulier, la source lumineuse est, par exemple, commune à tous les émetteurs 40. En variante, chaque émetteur 40 comporte une source lumineuse distincte des autres sources lumineuses.

Il est également à noter que des modes de réalisation dans lesquels la direction de polarisation DP forme un angle non nul avec l'axe du polariseur 20 sont également envisageables. Cela peut permettre notamment d'obtenir un meilleur équilibre entre les différents rayonnements R1A, R1B, R1C en sortie du polariseur 20.

De manière générale, il est par exemple prévu que le polariseur 20 soit positionné lors d'une étape de positionnement du polariseur d'un procédé de fabrication du dispositif électronique 10. Au cours de cette étape, une intensité lumineuse d'au moins un rayonnement R1A, R1B ou R1C est mesurée, et le polariseur 20 est positionné, notamment pivoté autour d'un axe parallèle à la direction normale N, en fonction de l'intensité lumineuse mesurée. Cela permet notamment que l'axe du polariseur 20 soit efficacement orienté parallèlement à la direction de polarisation DP, même si cette direction de polarisation DP n'est pas exactement celle qui était attendue suite à une imprécision lors de la fabrication des convertisseurs 45.

De plus, des modes de réalisation dans lesquels au moins un convertisseur 45 génère un rayonnement R1A, R1B ou R1C polarisé rectilignement sans que le convertisseur 45 comporte un ensemble de particules P sont également envisageables.

En outre, il s'avère que même en l'absence de la lame quart d'onde, la polarisation rectiligne des rayonnements R1A et R1B est avantageuse notamment en ce qu'elle permet d'améliorer l'intensité de ces rayonnements R1A, R1B perçue par un utilisateur du dispositif optoélectronique, mais qu'elle permet également de diminuer l'intensité relative du rayonnement R1C. Cela permet donc de modifier l'équilibre relatif de ces intensités, notamment dans le cadre d'une balance des blancs.

Il est à noter que, bien que les éléments émetteurs 15C ont été décrits ci-dessus comme ne comportant pas de convertisseur 45, des modes de réalisation dans lesquels chaque élément émetteur 15C comporte un convertisseur propre à convertir le deuxième rayonnement R2 en le premier rayonnement R1C sont également envisageables.

Dans ce cas, le deuxième rayonnement R2 diffère du premier rayonnement R1C, par exemple au moins en ce que la plage de longueurs d'ondes du premier rayonnement R1C est distincte de la plage de longueurs d'onde du deuxième rayonnement R2. En particulier, le deuxième rayonnement R2 est un rayonnement ultraviolet.

Il est à noter que des plages distinctes sont susceptibles de présenter un recouvrement non nul.

Le premier rayonnement R1C présente, par exemple, une polarisation elliptique.

Lorsque chaque élément émetteur 15C comporte un convertisseur 45, il est possible d'obtenir un meilleur équilibre des couleurs émises par les différents éléments émetteurs 15A, 15B, 15C.

En variante, le premier rayonnement R1C émis par le polariseur de l'élément émetteur 15C présente une polarisation rectiligne selon une direction parallèle à l'axe du polariseur 20. Cela peut permettre d'obtenir une meilleure efficacité d'émission du premier rayonnement R1C, puisque celui-ci n'est pas atténué par le polariseur 20.

Un deuxième exemple de dispositif optoélectronique 10 va maintenant être décrit. Les éléments identiques au premier exemple ne sont pas décrits à nouveau. Seules les différences sont mises en évidence.

Le dispositif optoélectronique 10 comporte une pluralité de polariseurs 20. En particulier, le dispositif optoélectronique comporte un polariseur 20 pour chaque élément émetteur 15A ou 15B, et optionnellement pour chaque élément émetteur 15C.

Chaque polariseur 20 est configuré pour être traversé par le premier rayonnement R1A, R1B ou R1C de l'élément émetteur 15A, 15B ou 15C associé au polariseur 20. En particulier, l'élément émetteur 15A, 15B ou 15C associé au polariseur 20 est interposé selon la direction normale N entre le polariseur 20 considéré et le substrat 12.

L'axe de chaque polariseur 20 est parallèle à la direction de polarisation DP de l'élément émetteur 15A, 15B, 15C correspondant.

La direction de polarisation DP de chaque élément émetteur 15A est différente de la direction de polarisation DP de chaque élément émetteur 15B et/ou de chaque élément émetteur 15C. En outre, la direction de polarisation DP de chaque élément émetteur 15B est différente de la direction de polarisation DP de chaque élément émetteur 15C.

En particulier, un angle entre la direction de polarisation DP de chaque élément émetteur 15A et la direction de polarisation DP de chaque élément émetteur 15B ou 15C est par exemple égal à 90°, à 5 degrés près. Toutefois, cet angle est susceptible de varier.

Un angle entre la direction de polarisation DP de chaque élément émetteur 15B et la direction de polarisation DP de chaque élément émetteur 15C est par exemple égal à 90°, à 5 degrés près. Toutefois, cet angle est susceptible de varier.

Les particules P de chaque élément émetteur 15A, 15B, 15C sont configurées pour que le premier rayonnement R1A, R1B, R1C correspondant soit polarisé rectilignement selon la direction de polarisation DP du polariseur 20 associé à l'élément émetteur 15A, 15B, 15C considéré.

Le deuxième exemple permet notamment de limiter la diaphonie entre éléments émetteurs 15A, 15B, 15C voisins, puisque le premier rayonnement R1A, R1B, R1C émis par un élément émetteur 15A, 15B, 15C est atténué par les polariseurs 20 associés aux autres éléments émetteurs 15A, 15B, 15C. La résolution du dispositif optoélectronique 10 est donc améliorée.

Il est à noter que, lorsque la lame quart d'onde 48 est interposée entre le convertisseur 45 et le polariseur 20, la direction de polarisation DP est par exemple perpendiculaire à l'axe du polariseur 20. En particulier, la direction de polarisation DP est parallèle à la deuxième direction D2.

### GLOSSAIRE

### DOPAGE

Le dopage se définit comme la présence, dans un matériau, d'impuretés apportant des porteurs de charges libres. Les impuretés sont, par exemple, des atomes d'un élément qui n'est pas naturellement présent dans le matériau.

Lorsque les impuretés augmentent la densité volumique de trous dans le matériel, par rapport à du matériel non dopé, le dopage est de type p. Par exemple, une couche de nitrure de gallium, GaN, est dopée p en ajoutant des atomes de magnésium (Mg).

Lorsque les impuretés augmentent la densité volumique d'électrons libres dans le matériau, par rapport au matériau non dopé, le dopage est de type n. Par exemple, une couche de nitrure de gallium, GaN, est dopée n en ajoutant des atomes de silicium (Si).

### STRUCTURE LED

Une structure LED est une structure semi-conductrice comprenant plusieurs zones semi-conductrices formant une jonction P-N et configurée pour émettre de la lumière lorsqu'un courant électrique circule à travers les différentes zones semi-conductrices.

Une structure bidimensionnelle comprenant une couche dopée n, une couche dopée p et au moins une couche émettrice est un exemple de structure LED. Dans ce cas, chaque couche émettrice est interposée, le long de la direction normale D, entre la couche dopée n et la couche dopée p.

Dans un mode de réalisation, chaque couche émettrice présente une valeur de bande interdite strictement inférieure à la valeur de bande interdite de la couche dopée n et strictement inférieure à la valeur de bande interdite de la couche dopée p. Par exemple, la couche dopée n et la couche dopée p sont des couches de GaN, et chaque couche émettrice est une couche d'InGaN.

La couche émettrice est, par exemple, non dopée. Dans d'autres modes de réalisation, la couche émettrice est dopée.

Un puits quantique constitue un exemple spécifique de couche émettrice présentant une valeur de bande interdite inférieure aux valeurs de bande interdite des couches dopées n et p.

### PUITS QUANTIQUE

Un puits quantique est une structure dans laquelle un confinement quantique se produit, dans une direction, pour au moins un type de porteurs de charges. Les effets du confinement quantique se produisent lorsque la dimension de la structure le long de cette direction devient comparable à ou plus petite que la longueur d'onde de De Broglie des porteurs, lesquels sont généralement des électrons et/ou à des trous, conduisant à des niveaux d'énergie appelés « sous-bandes d'énergie ».

Dans un tel puits quantique, les porteurs ne peuvent présenter que des valeurs d'énergie discrètes mais sont généralement aptes à se déplacer à l'intérieur d'un plan perpendiculaire à la direction dans laquelle le confinement se produit. Les valeurs d'énergie disponibles pour les porteurs, également appelées « niveaux d'énergie », augmentent lorsque les dimensions du puits quantique diminuent le long de la direction dans laquelle le confinement se produit.

En mécanique quantique, la « longueur d'onde de De Broglie » est la longueur d'onde d'une particule lorsque la particule est considérée comme une onde. La longueur d'onde de De Broglie des électrons est également appelée « longueur d'onde électronique ». La longueur d'onde de De Broglie d'un porteur de charge dépend du matériau dont est constitué le puits quantique.

Une couche émettrice dont l'épaisseur est strictement inférieure au produit de la longueur d'onde électronique des électrons dans le matériau semi-conducteur dont la couche émettrice est constituée et de cinq est un exemple de puits quantique.

Un autre exemple de puits quantique est une couche émettrice dont l'épaisseur est strictement inférieure au produit de la longueur d'onde de De Broglie d'excitons dans le matériau semi-conducteur dont la couche émettrice est constituée et de cinq. Un exciton est une quasi-particule comprenant un électron et un trou.

En particulier, un puits quantique présente souvent une épaisseur comprise entre 1 nm et 200 nm.

### MATÉRIAU SEMI-CONDUCTEUR

L'expression « valeur de bande interdite » doit être comprise comme étant la valeur de la bande interdite entre la bande de valence et la bande de conduction du matériau.

La valeur de bande interdite est, par exemple, mesurée en électrons-volts (eV).

La bande de valence est définie comme étant, parmi les bandes d'énergie qui sont autorisées pour les électrons dans le matériau, la bande qui présente l'énergie la plus élevée tout en étant complètement remplie à une température inférieure ou égale à 20 Kelvin (K).

Un premier niveau d'énergie est défini pour chaque bande de valence. Le premier niveau d'énergie est le niveau d'énergie le plus élevé de la bande de valence.

La bande de conduction est définie comme étant, parmi les bandes d'énergie qui sont autorisées pour les électrons dans le matériau, la bande qui présente l'énergie la plus faible tout en n'étant pas complètement remplie à une température inférieure ou égale à 20 K.

Un deuxième niveau d'énergie est défini pour chaque bande de conduction. Le deuxième niveau d'énergie est le niveau d'énergie le plus élevé de la bande de conduction.

Ainsi, chaque valeur de bande interdite est mesurée entre le premier niveau d'énergie et le deuxième niveau d'énergie du matériau.

Un matériau semi-conducteur est un matériau présentant une valeur de bande interdite strictement supérieure à zéro et inférieure ou égale à 6,5 eV.

Un semi-conducteur à bande interdite directe constitue un exemple de matériau semi-conducteur. Un matériau est considéré comme présentant une « bande interdite directe » lorsque le minimum de la bande de conduction et le maximum de la bande de valence correspondent à une même valeur de quantité de mouvement de porteurs de charge. Un matériau est considéré comme présentant une « bande interdite indirecte » lorsque le minimum de la bande de conduction et le maximum de la bande de valence correspondent à différentes valeurs de quantité de mouvement de porteurs de charge.

Chaque matériau semi-conducteur est susceptible d'être choisi, par exemple, parmi l'ensemble formé des semi-conducteurs III-V, notamment des nitrures d'éléments III, des semi-conducteurs II-VI, ou encore des semi-conducteurs IV-IV.

Les semi-conducteurs III-V comportent notamment InAs, GaAs, AlAs et leurs alliages, InP, GaP, AIP et leurs alliages, et les nitrures d'éléments III.

Les semi-conducteurs II-VI comportent notamment CdTe, HgTe, CdSe, HgSe, et leurs alliages.

Les semi-conducteurs IV-IV comportent notamment Si, Ge et leurs alliages.

### STRUCTURE TRIDIMENSIONNELLE

Une structure tridimensionnelle est une structure qui s'étend le long d'une direction principale. La structure tridimensionnelle présente une longueur mesurée le long de la direction principale. La structure tridimensionnelle présente également une dimension latérale maximale mesurée le long d'une direction latérale perpendiculaire à la direction principale, la direction latérale étant la direction perpendiculaire à la direction principale le long de laquelle la dimension de la structure est la plus grande.

La dimension latérale maximale est, par exemple, inférieure ou égale à 10 micromètres (µm), et la longueur est supérieure ou égale à la dimension latérale maximale. La dimension latérale maximale est avantageusement inférieure ou égale à 2,5 µm.

La dimension latérale maximale est, notamment, supérieure ou égale à 10 nm.

Dans des modes de réalisation spécifiques, la longueur est supérieure ou égale à deux fois la dimension latérale maximale, par exemple elle est supérieure ou égale à cinq fois la dimension latérale maximale.

La direction principale est, par exemple, la direction normale D. Dans ce cas, la longueur de la structure tridimensionnelle est appelée « hauteur » et la dimension maximale de la structure tridimensionnelle, dans un plan perpendiculaire à la direction normale D, est inférieure ou égale à 10 µm.

La dimension maximale de la structure tridimensionnelle, dans un plan perpendiculaire à la direction normale D, est souvent appelée « diamètre » quelle que soit la forme de la section transversale de la structure tridimensionnelle.

Par exemple, chaque structure tridimensionnelle est un microfil. Un microfil est une structure tridimensionnelle cylindrique.

Dans un mode de réalisation spécifique, le microfil est un cylindre s'étendant le long de la direction normale D. Par exemple, le microfil est un cylindre à base circulaire. Dans ce cas, le diamètre de la base du cylindre est inférieur ou égal à la moitié de la longueur du microfil.

Un microfil dont la dimension latérale maximale est inférieure à 1 µm est appelé un « nanofil ».

Une pyramide s'étendant le long de la direction normale D à partir du substrat 12 constitue un autre exemple de structure tridimensionnelle.

Un cône s'étendant le long de la direction normale D constitue un autre exemple de structure tridimensionnelle.

Un cône tronqué ou une pyramide tronquée s'étendant le long de la direction normale D constitue encore un autre exemple de structure tridimensionnelle.

### POLARISATION

La polarisation d'un rayonnement est une propriété de ce rayonnement relative au déphasage temporel entre les composantes du champ électrique de chaque onde composant ce rayonnement selon deux directions perpendiculaires l'une à l'autre et perpendiculaires à la direction de propagation de ce rayonnement.

Lorsque les deux composantes sont temporellement en phase, la polarisation est dite « rectiligne ». Elle se traduit par l'existence d'une direction, appelée direction de polarisation, à laquelle le vecteur champ électrique de l'onde est parallèle à chaque instant.

Lorsque les deux composantes présentent un déphasage temporel différent de zéro, la polarisation est dite « elliptique ». Dans le cas particulier où les deux composantes ont la même amplitude et sont déphasées de 90 degrés (°), la polarisation est alors dite « circulaire ».

### BOITE QUANTIQUE

Une boîte quantique est une structure dans laquelle un confinement quantique se produit dans les trois dimensions spatiales.

Pour donner un ordre de valeur, une particule P présentant une dimension maximale comprise entre 1 nm et 1 µm, et constituée d'un matériau de conversion semi-conducteur, constitue un exemple de boîte quantique.

## Revendications

1. Dispositif optoélectronique (10) comportant au moins un premier élément émetteur (15A) et un polariseur (20), chaque premier élément émetteur (15A) étant configuré pour émettre un premier rayonnement (R1A) présentant une première plage de longueurs d'ondes, le polariseur (20) étant configuré pour être traversé au moins partiellement par le premier rayonnement (R1A), chaque premier élément émetteur (15A) comportant un émetteur (40) et un convertisseur (45), l'émetteur (40) étant configuré pour émettre un deuxième rayonnement (R2) sur une deuxième plage de longueurs d'onde, la deuxième plage étant distincte de la première plage, le convertisseur (45) étant configuré pour absorber au moins partiellement le deuxième rayonnement (R2) et pour émettre en réponse le premier rayonnement (R1A), le polariseur (20) présentant un axe, chaque convertisseur (45) étant interposé entre l'émetteur de rayonnement (40) correspondant et le polariseur (20),
chaque convertisseur (45) étant configuré pour que le premier rayonnement (R1A) présente une polarisation rectiligne selon une direction de polarisation (DP),
**caractérisé en ce que** :
- le deuxième rayonnement (R2) présentant une polarisation elliptique,
- chaque premier élément émetteur (15A) comporte une lame quart d'onde (48), présentant un axe lent formant un angle de 45 degrés avec l'axe du polariseur (20),
- la lame quart d'onde (48) étant soit interposée entre l'émetteur (40) et le convertisseur (45) soit interposée entre le convertisseur (45) et le polariseur (20).

2. Dispositif optoélectronique selon la revendication 1, dans lequel la direction de polarisation (DP) est parallèle à l'axe du polariseur (20) lorsque la lame quart d'onde (48) étant soit interposée entre l'émetteur (40) et le convertisseur (45).

3. Dispositif optoélectronique selon la revendication 4, dans lequel la direction de polarisation (DP) est perpendiculaire à l'axe du polariseur (20) lorsque la lame quart d'onde (48) est interposée entre le convertisseur (45) et le polariseur (20).

4. Dispositif optoélectronique selon l'une quelconque des revendications 1 à 3, dans lequel le polariseur (20) est configuré pour être traversé par chaque premier rayonnement (R1A) selon une direction normale (N) perpendiculaire à l'axe du polariseur (20), chaque convertisseur (45) comportant un ensemble de particules (P) présentant une première dimension selon une première direction (D1) parallèle à la direction de polarisation (DP) et une deuxième dimension selon une deuxième direction (D2) perpendiculaire à la direction de polarisation (DP) et à la direction normale (N), un ratio entre, au numérateur, la première dimension, au dénominateur, la deuxième dimension, étant supérieur ou égal à deux.

5. Dispositif optoélectronique selon la revendication 4, dans lequel chaque première ou deuxième dimension est comprise entre 1 nanomètre et 1000 nanomètres.

6. Dispositif optoélectronique selon l'une quelconque des revendications 1 à 5, dans lequel chaque émetteur (40) comporte une diode électroluminescente (47).

7. Dispositif optoélectronique selon l'une quelconque des revendications 1 à 6, dans lequel chaque émetteur (40) comporte un cristal liquide.

8. Dispositif optoélectronique selon l'une quelconque des revendications 1 à 7, comportant, en outre, au moins un deuxième élément émetteur (15C), chaque deuxième élément émetteur (15C) étant configuré pour émettre un troisième rayonnement (R1C, R2) présentant une troisième plage de longueurs d'onde différente de la première plage, le polariseur (20) étant configuré pour être traversé au moins partiellement par le troisième rayonnement (R1C, R2).

9. Dispositif optoélectronique selon la revendication 8, dans lequel le troisième rayonnement (R1C, R2) est identique au deuxième rayonnement (R2), chaque deuxième élément émetteur (15C) comportant un émetteur de rayonnement (40), le deuxième élément émetteur (15C) étant dépourvu de convertisseur (45).

10. Dispositif optoélectronique selon l'une quelconque des revendications 1 à 9, comportant une pluralité d'éléments émetteurs (15A, 15B, 15C), le dispositif optoélectronique (10) comportant, en outre, au moins une barrière (70) interposée entre chaque élément émetteur (15A, 15B, 15C) et chaque autre élément émetteur (15A, 15B, 15C), la barrière (70) étant configurée pour empêcher chaque rayonnement (R1A, R1B, R1C, R2) de traverser la barrière (70).

11. Dispositif optoélectronique selon l'une quelconque des revendications 1 à 10, comportant une pluralité de polariseurs (20), chaque polariseur (20) étant associé à un élément émetteur (15A, 15B, 15C) correspondant, le polariseur (20) étant configuré pour être traversé au moins partiellement par le premier rayonnement (R1A, R1B) émis par l'élément émetteur (15A, 15B) correspondant, la direction de polarisation (DP) d'au moins un élément émetteur (15A, 15B) étant différente de la direction de polarisation (DP) d'au moins un autre élément émetteur (15A, 15B), la direction de polarisation (DP) de chaque élément émetteur (15A, 15B) associé à un polariseur (20) étant parallèle à l'axe du polariseur correspondant.

12. Dispositif optoélectronique selon l'une quelconque des revendications 1 à 11, comportant une pluralité d'éléments émetteurs (15A, 15B), dans lequel la direction de polarisation (DP) d'au moins un élément émetteur (15A, 15B) est différente de la direction de polarisation (DP) d'au moins un autre élément émetteur (15A, 15B), le dispositif électronique comportant un polariseur (20) configuré pour être traversé au moins partiellement par le premier rayonnement (R1A, R1B) émis par chacun des deux éléments émetteurs (15A, 15B) considérés.

13. Dispositif optoélectronique selon la revendication 11 ou 12, dans lequel une différence angulaire entre les directions de polarisation (DP) d'au moins deux éléments émetteurs (15A, 15B) est comprise entre 85 degrés et 95 degrés.

## Patentansprüche

1. Optoelektronische Vorrichtung (10), die zumindest ein erstes Senderelement (15A) und einen Polarisator (20) aufweist, wobei jedes erste Senderelement (15A) so konfiguriert ist, dass es eine erste Strahlung (R1A) sendet, die einen ersten Wellenlängenbereich aufweist, wobei der Polarisator (20) so konfiguriert ist, dass er zumindest teilweise von der ersten Strahlung (R1A) durchquert wird, wobei jedes erste Senderelement (15A) einen Sender (40) und einen Konverter (45) aufweist, wobei der Sender (40) so konfiguriert ist, dass er eine zweite Strahlung (R2) über einen zweiten Wellenlängenbereich sendet, wobei sich der zweite Bereich von dem ersten Bereich unterscheidet, wobei der Konverter (45) so konfiguriert ist, dass er die zweite Strahlung (R2) zumindest teilweise absorbiert und als Reaktion darauf die erste Strahlung (R1A) sendet, wobei der Polarisator (20) eine Achse aufweist, wobei jeder Konverter (45) zwischen dem entsprechenden Strahlungssender (40) und dem Polarisator (20) angeordnet ist,
wobei jeder Konverter (45) so konfiguriert ist, damit die erste Strahlung (R1A) eine geradlinige Polarisation gemäß einer Polarisationsrichtung (DP) aufweist,
**dadurch gekennzeichnet, dass**:
- die zweite Strahlung (R2) eine elliptische Polarisation aufweist,
- jedes erste Senderelement (15A) eine Viertelwellenplatte (48) aufweist, die eine langsame Achse aufweist, die einen Winkel von 45 Grad mit der Achse des Polarisators (20) bildet,
- die Viertelwellenplatte (48) entweder zwischen dem Sender (40) und dem Konverter (45) oder zwischen dem Konverter (45) und dem Polarisator (20) angeordnet ist.

2. Optoelektronische Vorrichtung nach Anspruch 1, wobei die Polarisationsrichtung (DP) parallel zu der Achse des Polarisators (20) verläuft, wenn die Viertelwellenplatte (48) zwischen dem Sender (40) und dem Konverter (45) angeordnet ist.

3. Optoelektronische Vorrichtung nach Anspruch 4, wobei die Polarisationsrichtung (DP) senkrecht zu der Achse des Polarisators (20) verläuft, wenn die Viertelwellenplatte (48) zwischen dem Konverter (45) und dem Polarisator (20) angeordnet ist.

4. Optoelektronische Vorrichtung nach einem der Ansprüche 1 bis 3, wobei der Polarisator (20) so konfiguriert ist, dass er von jeder ersten Strahlung (R1A) gemäß einer Normalrichtung (N) senkrecht zur Achse des Polarisators (20) durchquert wird, wobei jeder Konverter (45) eine Gesamtheit von Partikeln (P) aufweist, die eine erste Dimension gemäß einer ersten Richtung (D1) parallel zu der Polarisationsrichtung (DP) und eine zweite Dimension gemäß einer zweiten Richtung (D2) senkrecht zu der Polarisationsrichtung (DP) und zu der Normalrichtung (N) aufweisen, wobei ein Verhältnis zwischen der ersten Dimension im Zähler, der zweiten Dimension im Nenner größer oder gleich zwei ist.

5. Optoelektronische Vorrichtung nach Anspruch 4, wobei jede erste oder zweite Dimension zwischen 1 Nanometer und 1000 Nanometer liegt.

6. Optoelektronische Vorrichtung nach einem der Ansprüche 1 bis 5, wobei jeder Sender (40) eine lichtemittierende Diode (47) aufweist.

7. Optoelektronische Vorrichtung nach einem der Ansprüche 1 bis 6, wobei jeder Sender (40) einen Flüssigkristall aufweist.

8. Optoelektronische Vorrichtung nach einem der Ansprüche 1 bis 7, die ferner zumindest ein zweites Senderelement (15C) aufweist, wobei jedes zweite Senderelement (15C) so konfiguriert ist, dass es eine dritte Strahlung (R1C, R2) sendet, die einen dritten Wellenlängenbereich aufweist, der sich von dem ersten Bereich unterscheidet, wobei der Polarisator (20) so konfiguriert ist, dass er zumindest teilweise von der dritten Strahlung (R1C, R2) durchquert wird.

9. Optoelektronische Vorrichtung nach Anspruch 8, wobei die dritte Strahlung (R1C, R2) mit der zweiten Strahlung (R2) identisch ist, wobei jedes zweite Senderelement (15C) einen Strahlungssender (40) aufweist, wobei das zweite Senderelement (15C) keinen Konverter (45) besitzt.

10. Optoelektronische Vorrichtung nach einem der Ansprüche 1 bis 9, die eine Vielzahl von Senderelementen (15A, 15B, 15C) aufweist, wobei die optoelektronische Vorrichtung (10) ferner zumindest eine Barriere (70) aufweist, die zwischen jedem Senderelement (15A, 15B, 15C) und jedem anderen Senderelement (15A, 15B, 15C) angeordnet ist, wobei die Barriere (70) so konfiguriert ist, dass sie jede Strahlung (R1A, R1B, R1C, R2) daran hindert, die Barriere (70) zu durchqueren.

11. Optoelektronische Vorrichtung nach einem der Ansprüche 1 bis 10, die eine Vielzahl von Polarisatoren (20) aufweist, wobei jeder Polarisator (20) einem entsprechenden Senderelement (15A, 15B, 15C) zugeordnet ist, wobei der Polarisator (20) so konfiguriert ist, dass er zumindest teilweise von der ersten Strahlung (R1A, R1B) durchquert wird, die von dem entsprechenden Senderelement (15A, 15B) gesendet wird, wobei sich die Polarisationsrichtung (DP) zumindest eines Emitterelements (15A, 15B) von der Polarisationsrichtung (DP) zumindest eines anderen Senderelements (15A, 15B) unterscheidet, wobei die Polarisationsrichtung (DP) jedes einem Polarisator (20) zugeordneten Senderelements (15A, 15B) parallel zu der Achse des entsprechenden Polarisators ist.

12. Optoelektronische Vorrichtung nach einem der Ansprüche 1 bis 11, die eine Vielzahl von Senderelementen (15A, 15B) aufweist, wobei die Polarisationsrichtung (DP) zumindest eines Senderelements (15A, 15B) von der Polarisationsrichtung (DP) zumindest eines anderen Senderelements (15A, 15B) unterscheidet, wobei die elektronische Vorrichtung einen Polarisator (20) aufweist, der so konfiguriert ist, dass er von der von jedem der beiden betrachteten Senderelemente (15A, 15B) emittierten ersten Strahlung (R1A, R1B) zumindest teilweise durchquert wird.

13. Optoelektronische Vorrichtung nach Anspruch 11 oder 12, wobei eine Winkeldifferenz zwischen den Polarisationsrichtungen (DP) von zumindest zwei Senderelementen (15A, 15B) zwischen 85 Grad und 95 Grad liegt.

## Claims

1. An optoelectronic device (10) comprising at least a first emitting element (15A)and a polariser (20), each first emitting element (15A) being configured to emit a first radiation (R1A) having a first range of wavelengths, the polariser (20) being configured to be traversed at least partially by the first radiation (R1A), each first emitting element (15A) comprising an emitter (40) and a converter (45) the emitter (40) being configured to emit a second radiation (R2) having a second range of wavelengths, the second range being distinct from the first range, the converter (45) being configured to at least partially absorb the second radiation (R2) and to emit the first radiation (R1A) in response, the polariser (20) having an axis, each converter (45) being interposed between the corresponding radiation emitter (40) and the polariser (20),
**characterised in that** each converter (45) being configured so that the first radiation (R1A) is rectilinearly polarised along a polarisation direction (DP),
**characterized in that**:
- the second radiation (R2) has an elliptical polarisation,
- each first emitting element (15A) comprises a quarter-waveplate (48) having a slow axis forming an angle of 45 degrees with the axis of the polariser (20),
- the quarter-waveplate (48) being either interposed between the emitter (40) and the converter (45).

2. The optoelectronic device according to claim 1, wherein the polarisation direction (DP) is parallel to the axis of the polariser (20) when the quarter-waveplate (48) is interposed between the emitter (40) and the converter (45).

3. The optoelectronic device according to claim 4, wherein each first emitting element (15A) comprises a quarter-waveplate (48) interposed between the converter (45) and the polariser (20), the quarter-waveplate (48) having a slow axis forming an angle of 45 degrees with the axis of the polariser (20).

4. The optoelectronic device according to any one of claims 1 to 3, wherein the polariser (20) is configured to be traversed by each first radiation (R1A) in a normal direction (N) perpendicular to the axis of the polariser (20), each converter (45) comprising a set of particles (P) having a first dimension in a first direction (D1) parallel to the polarisation direction (DP) and a second dimension in a second direction (D2) perpendicular to the polarisation direction (DP) and to the normal direction (N), a ratio between, in the numerator, the first dimension, and in the denominator, the second dimension, being greater than or equal to two.

5. The optoelectronic device according to claim 6, wherein each first or second dimension is between 1 nanometer and 1,000 nanometers.

6. The optoelectronic device according to any according to claims 1 to 5, wherein each emitter (40) comprises a light-emitting diode (47).

7. The optoelectronic device according to according to any one of claims 1 to 6, wherein each emitter (40) comprises a liquid crystal.

8. The optoelectronic device according to any one of claims 1 to 7, further comprising at least one second emitting element (15C), each second emitting element (15C) being configured to emit a third radiation (R1C, R2) having a third wavelength range different from the first range, the polariser (20) being configured to be traversed at least partially by the third radiation (R1C, R2).

9. The optoelectronic device according to claim 8, wherein the third radiation (R1C, R2) is identical to the second radiation (R2), each second emitting element (15C) comprising a radiation emitter (40), the second emitting element (15C) being without a converter (45).

10. The optoelectronic device according to any one of claims 1 to 9, comprising a plurality of emitting elements (15A, 15B, 15C), the optoelectronic device (10) further comprising at least one barrier (70) interposed between each emitting element (15A, 15B, 15C) and each other emitting element (15A, 15B, 15C), the barrier (70) being configured to prevent each radiation (R1A, R1B, R1C, R2) from passing through the barrier (70).

11. The optoelectronic device according to any one of claims 1 to 10, comprising a plurality of polarisers (20), each polariser (20) being associated with a corresponding emitting element (15A, 15B, 15C), the polariser (20) being configured to be traversed at least partially by the first radiation (R1A, R1B) emitted by the corresponding emitting element (15A, 15B), the polarisation direction (DP) of at least one emitting element (15A, 15B) being different from the polarisation direction (DP) of at least one other emitting element (15A, 15B), the polarisation direction (DP) of each emitting element (15A, 15B) associated with a polariser (20) being parallel to the axis of the corresponding polariser.

12. The optoelectronic device according to any one of claims 1 to 11, comprising a plurality of emitting elements (15A, 15B), wherein the polarisation direction (DP) of at least one emitting element (15A, 15B) is different from the polarisation direction (DP) of at least one other emitting element (15A, 15B), the electronic device comprising a polariser (20) configured to be traversed at least partially by the first radiation (R1A, R1B) emitted by each of the two emitting elements (15A, 15B) in question.

13. The optoelectronic device according to claim 11 or 12, wherein an angular difference between the polarisation directions (DP) of at least two emitting elements (15A, 15B) is between 85 degrees and 95 degrees.
